# EUROPÄISCHE PATENTSCHRIFT

(11) **EP 3 793 876 B1**
(45) Veröffentlichungstag und Bekanntmachung des Hinweises auf die Patenterteilung: **11.05.2022**
(21) Anmeldenummer: 19725659.7
(22) Anmeldetag: 13.05.2019
(51) Int. Cl.: B62D 59/04, B60W 30/19, B60K 6/22, B60K 6/48, B60K 6/52, B60W 10/08, B60W 10/11, B60W 20/15, B60W 50/00

(54) **VORRICHTUNG FÜR EINEN FAHRZEUGANHÄNGER SOWIE SYSTEM DAMIT UND VERFAHREN DAFÜR**
DEVICE FOR A VEHICLE TRAILER, A SYSTEM WITH SAID DEVICE AND A METHOD FOR SAID DEVICE
DISPOSITIF POUR REMORQUE DE VÉHICULE ET SYSTÈME ASSOCIÉ ET PROCÉDÉ ASSOCIÉ

(30) Priorität: 15.05.2018 DE 102018111683
(43) Veröffentlichungstag der Anmeldung: 24.03.2021
(73) Patentinhaber: ZF CV Systems Europe BV, 1170 Brussels (BE)
(72) Erfinder: HESEDING, Johannes, 30169 Hannover (DE); SCHÜNEMANN, Gerd, 30880 Laatzen (DE)
(74) Vertreter: Ohlendorf, Henrike
(86) Internationale Anmeldenummer: PCT/EP2019/062129
(87) Internationale Veröffentlichungsnummer: WO 2019/219559

(56) Entgegenhaltungen:
- EP-A1- 3 305 574
- WO-A2-2010/025101
- DE-A1-102008 043 849
- US-A1- 2007 193 795

## Beschreibung

Gemäß dem Stand der Technik sind Zugfahrzeuge zum Ziehen von Fahrzeuganhängern üblicherweise mit automatisierten manuellen Schaltgetrieben (AMT) ausgerüstet. Ein Drehmoment, das von einem Verbrennungsmotor des Zugfahrzeugs bereitgestellt wird, wird über das Schaltgetriebe an Räder übertragen, um das Zugfahrzeug anzutreiben. Derartige Schaltgetriebe sind nicht lastschaltbar. Daher muss bei jedem Schaltvorgang des Getriebes die Kupplung des Getriebes geöffnet werden, sodass hieraus eine Unterbrechung der Drehmomentabgabe an die angetriebenen Räder resultiert. Daraus resultiert eine Kraftunterbrechung, die insbesondere bei Lastzügen oder Sattelzügen zu ungleichmäßiger Beschleunigung und einem Geschwindigkeitsverlust führt und den Fahrkomfort beeinträchtigt. Um den Geschwindigkeitsverlust wieder auszugleichen, ist zusätzlicher Kraftstoffverbrauch nötig.

Aus dem Stand der Technik sind Doppelkupplungsgetriebe bekannt, die eine Zugkraftunterbrechung bzw. Unterbrechung der Drehmomentabgabe an die angetriebenen Räder stark minimieren, aber aufgrund hoher Kosten und der erhöhten Systemkomplexität meist nicht in Nutzfahrzeugen Verwendung finden. Eine Quelle hierfür ist zum Beispiel in "Getriebetechnik: Chancen und Herausforderungen" von Christiane Brünglinghaus unter https://www.springerprofessional.de/en/fahrzeugtechnik/automatikgetriebe/getri ebetechnik-chancen-und-herausforderungen/6562296 zu finden.

EP 3 305 574 A1 offenbart ein gezogenes Fahrzeug in einer Straßenfahrzeug-Zugkombination. Das gezogene Fahrzeug weist einen Energiespeicher in Form einer elektrischen Batterie auf. Das gezogene Fahrzeug weist ein System auf, welches einen Funktionsblock mit einem Dateneingang, sowie einen Datenausgang zum Ausgeben eines Drehmomenterhöhungsanforderungssignals an ein Elektromotorsteuergerät eines elektrischen Antriebs des Fahrzeuganhängers umfasst. Es werden Daten zu einem aktuellen und zukünftigen Fahrbetriebszustand der Straßenfahrzeug-Zugkombination ermittelt und aus diesen Daten ein Antriebsbedarf zusätzlich zum Antrieb durch die Zugmaschine ermittelt. Wird ein Antriebsbedarf ermittelt, wird eine Antriebseinheit an dem gezogenen Fahrzeug aktiviert.

Aufgabe der vorliegenden Erfindung ist es demnach, eine ungleichmäßige Beschleunigung oder einen Geschwindigkeitseinbruch während eines Gangwechsels eines Zugfahrzeugs eines Lastzugs, insbesondere eines Sattelzugs, zu minimieren oder im Wesentlichen sogar zu eliminieren, um hierdurch zusätzlichen Kraftstoffverbrauch zum Wiederausgleich des aufgetretenen Geschwindigkeitsverlusts zu vermeiden sowie den Fahrkomfort und die Sicherheit zu erhöhen. Gleichzeitig soll eine kostengünstige Lösung gefunden werden.

Hierzu betrifft die Vorrichtung ein System für einen Fahrzeuganhänger, insbesondere einen Sattelauflieger. Das System umfasst einen Funktionsblock, zum Beispiel ein erstes Steuergerät, mit einem Dateneingang, einer Steuerung und einem Datenausgang. Der Funktionsblock ist vorzugsweise ein separates Steuergerät oder in ein Steuergerät, zum Beispiel ein Bremssteuergerät oder Motorsteuergerät, integriert. Der Dateneingang ist eingerichtet, um Gangwechselsignale eines den Fahrzeuganhänger ziehenden Fahrzeugs zu empfangen. Ein Gangwechselsignal zeigt hierbei einen kurz bevorstehenden Gangwechsel oder den Beginn eines Gangwechsels an. Das den Fahrzeuganhänger ziehende Fahrzeug ist vorzugsweise ein Nutzfahrzeug, wie ein Lastkraftwagen oder dergleichen, oder ein Personenkraftwagen. Der Funktionsblock ist eingerichtet, ein Drehmomenterhöhungsanforderungssignal, das insbesondere mindestens einen Drehmomentwert umfasst, in Abhängigkeit des erkannten Gangwechselsignals zu erzeugen. Der Datenausgang ist eingerichtet, das Drehmomenterhöhungsanforderungssignal direkt oder indirekt an ein Elektromotorsteuergerät mindestens eines elektrischen Antriebs des Fahrzeuganhängers auszugeben. Das Drehmomenterhöhungsanforderungssignal zeigt hierbei eine Anforderung einer Erhöhung des momentanen Drehmoments eines elektrischen Antriebs, der durch das Elektromotorsteuergerät angesteuert wird, an.

Demnach dient das System, Gangwechselsignale, zu empfangen, die den Gangwechsel eines den Fahrzeuganhänger ziehenden Fahrzeugs anzeigen und beispielsweise durch ein Fahrzeugsteuergerät mittels eines Bussystems bereitgestellt werden. Durch Empfangen des Gangwechselsignals kann darauf geschlossen werden, dass eine Zugkraftunterbrechung bevorsteht oder bereits beginnt. Durch Ansteuern eines elektrischen Antriebs des Fahrzeuganhängers mit einem erhöhten Drehmoment mittels Ausgabe eines Drehmomenterhöhungsanforderungssignals kann bereits frühzeitig auf eine Zugkraftunterbrechung reagiert werden. Hierzu wird vorausgesetzt, dass der Fahrzeuganhänger einen elektrischen Antrieb aufweist, mit dem ein Drehmoment auf die Antriebsräder des Fahrzeuganhängers ausübbar ist.

Im Falle eines Gangwechsels des den Fahrzeuganhänger ziehenden Fahrzeugs wird somit durch das System durch Erzeugen des Drehmomenterhöhungsanforderungssignals ein Drehmoment eines oder mehrerer elektrischer Motoren eines elektrischen Antriebs erhöht, um somit das den Fahrzeuganhänger ziehende Fahrzeug zu schieben und somit der Zugkraftunterbrechung entgegenzuwirken. Hierdurch entsteht ein Komfortvorteil für den Fahrer, da er im Wesentlichen keinen Beschleunigungswechsel im Schaltvorgang, also beim Gangwechsel, erfährt. Außerdem wird ein Geschwindigkeitsverlust und damit ungewollter Verlust kinetischer Energie vermieden, der ansonsten nach dem Gangwechselvorgang durch ein erhöhtes Drehmoment des Verbrennungsmotors ausgeglichen werden müsste.

Gemäß einer ersten Ausführungsform umfasst das Drehmomenterhöhungsanforderungssignal mindestens einen Drehmomentwert. Der Drehmomentwert ist am Datenausgang ausgebbar. Das System ist eingerichtet, mit am Datenausgang bereitgestellten Drehmomentwerten Drehmomentsollwertvorgaben für eine oder mehrere elektrische Motoren des elektrischen Antriebs des Fahrzeuganhängers zu überlagen. Drehmomentsollwertvorgaben für einen oder mehrere elektrische Motoren des elektrischen Antriebs werden von einem Anhängersteuergerät, das vorzugsweise Bestandteil des Systems ist, bereitgestellt.

Vorzugsweise werden die Drehmomentsollwertvorgaben direkt vom Anhängersteuergerät oder einem das Anhängerfahrzeug ziehenden Fahrzeugs erzeugt. Die Drehmomentsollwertvorgaben dienen zur Ansteuerung des elektrischen Antriebs mit einem gewünschten Drehmoment des oder der elektrischen Motoren des Anhängerfahrzeugs während der normalen Fahrt und sind beispielsweise abhängig von einer gewünschten Fahrgeschwindigkeit. Diese Überlagerung erfolgt vorzugsweise durch ein Addierglied, das ebenfalls vorzugsweise Bestandteil des Systems ist. Mit dem Addierglied erfolgt die Überlagerung durch Aufaddieren mindestens eines Drehmomentwerts des Drehmomenterhöhungsanforderungssignals und mindestens einer Drehmomentsollwertvorgabe für mindestens einen elektrischen Motor.

Ein System mit dem Funktionsblock ist somit in einfacher Weise in eine vorhandene Struktur eines Fahrzeuganhängers mit einem elektrischen Antrieb sowie einem Anhängersteuergerät integrierbar.

Gemäß einer weiteren Ausführungsform ist der Funktionsblock eingerichtet, Drehmomentwerte des Drehmomenterhöhungsanforderungssignals in Abhängigkeit mindestens eines aktuellen Drehzahlwerts sowie einer Änderung der Drehzahlwerte des mindestens einen elektrischen Motors des elektrischen Antriebs des Fahrzeuganhängers zu bestimmen. Zum Bestimmen der Änderung der Drehzahl weist der Funktionsblock vorzugsweise ein Abtasthalteglied auf, das auch "Sample-and-Hold-Einheit" genannt wird. Dem Abtasthalteglied sind aufeinanderfolgende aktuelle Drehzahlwerte des oder der elektrischen Motoren zuführbar, um hieraus eine Änderung der Drehzahlwerte zu bestimmen. Eine Abtastung mit dem Abtasthalteglied erfolgt zum Beispiel in 100ms-lntervallen. Außerdem weist der Funktionsblock vorzugsweise ein Integrationsglied auf, das dient, um die aktuellen Drehzahlwerte aus Positionswerten von Positionssensoren der elektrischen Motoren zu bestimmen.

Hierdurch kann eine Änderung der Fahrzeuggeschwindigkeit unmittelbar bei der Bereitstellung zusätzlicher Schubkraft durch den Fahrzeuganhänger beim Gangwechsel berücksichtigt und eine entsprechende zusätzliche Schubkraft bereitgestellt werden.

Gemäß einer weiteren Ausführungsform ist der Funktionsblock eingerichtet, Drehmomentwerte des Drehmomenterhöhungsanforderungssignals zusätzlich in Abhängigkeit mindestens eines Schlupfwertes zu bestimmen. Der Schlupfwert ist vorzugsweise durch Bilden eines Differenzwerts zwischen einer vorgebbaren Referenzdrehzahl, beispielsweise einer Referenzfahrzeuggeschwindigkeit, und einer aktuellen Drehzahl des mindestens einen elektrischen Motors bestimmbar. Schlupfwerte werden vorzugsweise mit dem System selbst bestimmt oder durch ein Anhängersteuergerät, zum Beispiel mittels eines Bussystems, bereitgestellt. Das Anhängersteuergerät ist zum Beispiel ein elektronisches Anhängerbremssystem (TEBS).

Durch Berücksichtigen des Schlupfwertes beim Erzeugen des Drehmomentwerts des Drehmomenterhöhungsanforderungssignals wird ein zusätzliches Drehmoment im Falle des Gangwechsels noch genauer bestimmt, sodass einer ungleichmäßigen Beschleunigung und einem Geschwindigkeitsverlust noch besser entgegengewirkt wird.

Gemäß einer weiteren Ausführungsform umfasst das der Funktionsblock ein Additionsglied, um eine Änderung der Drehzahlwerte der elektrischen Motoren, mindestens einen aktuellen Drehzahlwert des mindestens einen elektrischen Motors sowie eines oder mehrerer Schlupfwerte miteinander zu addieren und als Summenwert auszugeben. Das Additionsglied kann auch Addierglied genannt werden.

Gemäß einer weiteren Ausführungsform umfasst der Funktionsblock einen Linearregler mit einem proportional verstärkendem Verhalten, mit dem aus den Summenwerten des Additionsgliedes sowie aktueller Drehzahlwerte des mindestens einen elektrischen Motors die Drehmomentwerte des Drehmomenterhöhungsanforderungssignals erzeugbar sind. Die Drehmomentwerte des Drehmomenterhöhungsanforderungssignals werden somit in Abhängigkeit der mit dem Additionsglied erzeugten Summenwerte sowie aktueller Drehzahlwerte des mindestens einen elektrischen Motors bestimmt.

Gemäß einer weiteren Ausführungsform ist der Funktionsblock eingerichtet, ein Gangwechselsignal zu empfangen, das ein Gangwechselausführsignal ist. Ein Gangwechselausführsignal zeigt an, dass ein Gangwechsel unmittelbar bevorsteht oder bereits ausgeführt wird. Der Funktionsblock ist außerdem eingerichtet, nach dem Empfangen des Gangwechselausführsignals einen von 0 unterschiedlichen Drehmomentwert des Drehmomenterhöhungsanforderungssignals auszugeben, bis ein Gangwechselsignal empfangen wird, das ein Gangwechselerledigungssignal ist. Ein Gangwechselerledigungssignal zeigt an, dass ein Gangwechsel abgeschlossen ist. Der ausgegebene Drehmomentwert des Drehmomenterhöhungsanforderungssignals vom Empfang des Gangwechselausführsignals bis zum Empfang des Gangwechselerledigungssignals ist vorzugsweise im Wesentlichen konstant und wird vorzugsweise durch den Ausgang des Linearreglers bereitgestellt.

Vorzugsweise wird der Drehmomentwert des Drehmomenterhöhungsanforderungssignals nach dem Empfang des Gangwechselerledigungssignals auf 0 abgesenkt. Dies erfolgt unabhängig von den Eingangssignalen des Linearreglers, zum Beispiel durch Deaktivieren der ersten Steuerung des Funktionsblocks oder des Funktionsblocks durch Deaktivieren des Linearreglers.

Hierdurch ist sichergestellt, dass der Funktionsblock ein Drehmomenterhöhungsanforderungssignal insbesondere so lange mit einem Drehmomentwert ausgibt, wie ein Gangwechsel ausgeführt wird, um somit über den gesamten Gangwechselvorgang einer Zugkraftunterbrechung entgegenzuwirken. Vorzugsweise wird nach dem Abschluss des Gangwechsels der Drehmomentwert des Drehmomenterhöhungsanforderungssignals wieder auf 0 abgesenkt, um nicht mehr aktiv in die Steuerung der elektrischen Motoren des Fahrzeuganhängers und somit nicht in die Antriebssteuerung des Fahrzeuganhängers und eines Lastzugs insgesamt einzugreifen.

Gemäß einer weiteren Ausführungsform ist der Funktionsblock eingerichtet, vor dem Empfang eines Gangwechselsignals, das ein Gangwechselausführsignal ist, zunächst ein Gangwechselsignal zu empfangen, das ein Gangwechselankündigungssignal ist. Zudem ist die Vorrichtung eingerichtet, am Datenausgang einen Drehmomentwert des Drehmomenterhöhungsanforderungssignals auszugeben, der nach dem Empfang des Gangwechselankündigungssignals zumindest bis zum Empfang des Gangwechselausführsignals in einem oder mehreren Schritten oder kontinuierlich erhöht wird.

Demnach ist schon kurz vor dem Ausführen eines bevorstehenden Gangwechsels ein Gangwechselankündigungssignal empfangbar, mit dem angekündigt wird, dass der Gangwechsel bevorsteht. Bereits in diesem Augenblick wird damit begonnen, den Drehmomentwert des Drehmomenterhöhungsanforderungssignals zu erhöhen, um ein abruptes Erhöhen eines Drehmoments des elektrischen Antriebs beim Ausführen des Gangwechsels zu vermeiden. Hierdurch wird ein Spiel im Königszapfen eines Schaltgetriebes überwunden, sodass ein Anlagewechsel beim Schalten vermindert bzw. verhindert wird.

Gemäß einer weiteren Ausführungsform umfasst der Funktionsblock einen aktivierten und deaktivierten Zustand, wobei das System eingerichtet ist, im deaktivierten Zustand des Funktionsblocks einen Drehmomentwert von 0 am Ausgang des Funktionsblocks auszugeben und vom deaktivierten in den aktivierten Zustand nach dem Empfangen eines Gangwechselsignals, das ein Gangwechselankündigungssignal oder ein Gangwechselausführsignal ist, zu wechseln und vom aktivierten in den deaktivierten Zustand zu wechseln, nachdem ein Gangwechselsignal empfangen wird, das ein Gangwechselerledigungssignal ist. Der aktivierte Zustand wird vorzugsweise durch Aktivieren des Linearreglers und der deaktivierte Zustand durch Deaktivieren des Linearreglers erzeugt.

Hierdurch wird sichergestellt, dass ein Drehmomenterhöhungsanforderungssignal nur im Falle eines tatsächlich ausgeführten Gangwechsels erzeugt wird. Der Funktionsblock hat somit keinen Einfluss auf vom Anhängersteuergerät vorgegebene Drehmomentsollwertvorgaben für den elektrischen Antrieb während der normalen Fahrt.

Gemäß einer weiteren Ausführungsform umfasst das System mindestens einen Sensor oder ist eingerichtet, mit mindestens einem Sensor verbunden zu werden. Der Sensor ist eingerichtet, Fahrzustände des Fahrzeuganhängers, zum Beispiel Kurvenfahrten und/oder Bergabfahrten, zu detektieren. Diese besonderen Fahrzustände können somit bei der Erzeugung des Drehmomenterhöhungsanforderungssignals berücksichtigt werden.

Gemäß einer weiteren Ausführungsform umfasst der Sensoren mindestens einen Giratensensor und/oder mindestens einen Neigungssensor und/oder mindestens einen Beschleunigungssensor und/oder mehrere Drehzahlsensoren und/oder mehrere Drehpositionssensoren, wobei die Drehzahlsensoren oder Drehpositionssensoren eingerichtet sind, Drehzahlen von Rädern des Fahrzeuganhängers auf unterschiedlichen Seiten des Fahrzeuganhängers zu erfassen. Derartige Sensoren stehen als standardisierte Bauteile zur Verfügung und dienen, um besondere Fahrzustände des Fahrzeuganhängers auf einfache Weise zu detektieren. Insbesondere sind mindestens zwei derartige Sensoren in einem Fahrzeuganhänger vorhanden, um eine Funktionalität für ein Antiblockiersystem (ABS) zu erfüllen und werden vom vorliegenden System mitgenutzt.

Gemäß einer weiteren Ausführungsform ist der Funktionsblock eingerichtet, unterschiedliche Drehmomentsollwerte des Drehmomenterhöhungsanforderungssignals für unterschiedliche elektrische Motoren am Ausgang der ersten Steuerung des Funktionsblocks auszugeben. In Kurvenfahrten oder bei besonderen Fahrzuständen kann somit eine achs- oder radabhängige Drehmomenterhöhung beim Gangwechsel erfolgen, um einen Fahrzustand zu stabilisieren.

Gemäß einer weiteren Ausführungsform ist das System eingerichtet, nach dem Empfang eines Gangwechselsignals, das ein Gangwechselankündigungssignal oder ein Gangwechselausführsignal ist, durch Detektion einer vordefinierten Bedingung, zum Beispiel eines vordefinierten Fahrzeugzustandes, wie einer Kurvenfahrt, daran gehindert zu werden, vom deaktivierten in den aktivierten Zustand zu wechseln oder deaktiviert zu werden.

Eine Drehmomenterhöhung erfolgt demnach beispielsweise in bestimmten detektierten Fahrzuständen des Fahrzeuganhängers nicht, auch wenn ein Gangwechsel erfolgt, um hierdurch sicherzustellen, dass die Fahrstabilität des Lastzugs oder Sattelzugs nicht gefährdet wird.

Gemäß einer weiteren Ausführungsform ist der Funktionsblock eingerichtet, Gangwechselsignale, und vorzugsweise Schlupfwerte, vom einem Bussystem, insbesondere einem CAN-Bus, zu empfangen. Alternativ ist das System eingerichtet, Gangwechselsignale in Abhängigkeit eines über eine Gaspedalstellung detektierten Beschleunigungswunsches in Verbindung mit einem detektierbaren Geschwindigkeitsverlust selbst zu erzeugen.

Insbesondere durch Vorgabe über ein Bussystem können mit dem Funktionsblock somit in einfacher Art und Weise bereits ohnehin vorhandene Informationen über einen bevorstehenden oder ausgeführten Gangwechsel genutzt werden.

Gemäß einer weiteren Ausführungsform umfasst das System einen Fahrzeuganhänger mit einem elektrischen Antrieb. Der elektrische Antrieb umfasst einen Energiespeicher und einen Umrichter zum Erzeugen einer Wechselspannung aus der Gleichspannung eines Energiespeichers. Außerdem umfasst der elektrische Antrieb einen oder mehrere elektrische Motoren zum Erzeugen eines Drehmoments aus dem Wechselstrom sowie ein Elektromotorsteuergerät zum Ansteuern der Umrichter.

Gemäß einer weiteren Ausführungsform umfasst das System außerdem ein Zugfahrzeug. Das Zugfahrzeug ist vorzugsweise ein Nutzfahrzeug, wie ein Lastkraftwagen oder dergleichen, oder ein Personenkraftwagen zum Ziehen des Fahrzeuganhängers. Vorzugsweise weist auch das Zugfahrzeug einen Funktionsblock auf.

Außerdem betrifft die Erfindung ein Verfahren zum Betreiben eines Systems nach einer der zuvor genannten Ausführungsformen.

Weitere Ausführungsformen ergeben sich anhand der in den Figuren näher erläuterten Ausführungsbeispiele. Hierbei zeigt:
- Fig. 1: ein Ausführungsbeispiel des Systems,
- Fig. 2: ein von einem elektrischen Antrieb bereitstellbares zusätzliches Drehmoment in Abhängigkeit der Fahrzeuggeschwindigkeit,
- Fig. 3: einen Gangwechsel bei einer geringen Fahrzeuggeschwindigkeit,
- Fig. 4: ein weiteres Beispiel eines Schaltvorgangs,
- Fig. 5: ein weiteres Beispiel eines Schaltvorgangs und
- Fig. 6: die Schritte des Verfahrens gemäß einem Ausführungsbeispiel.

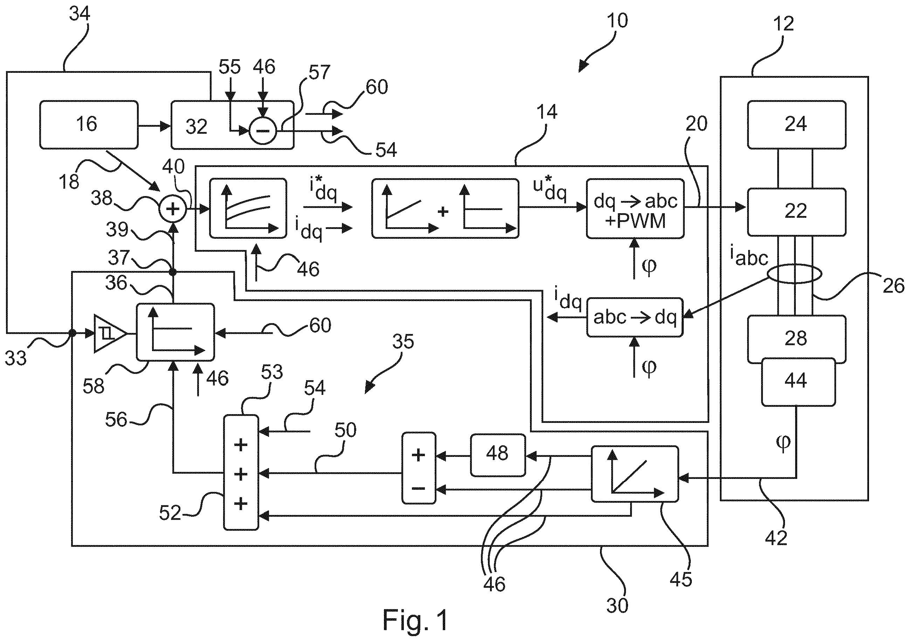

Hierbei zeigt Fig. 1 ein erstes Ausführungsbeispiel des Systems 10 für einen Fahrzeuganhänger. Das System 10 umfasst einen elektrischen Antrieb 12 zum Antreiben des Fahrzeuganhängers. Der elektrische Antrieb 12 wird durch ein Elektromotorsteuergerät 14 angesteuert. Dem elektrischen Motorsteuergerät 14 werden von einem Anhängersteuergerät 16 Drehmomentsollwertvorgaben 18 zugeführt. In Abhängigkeit der Drehmomentsollwertvorgaben 18 erzeugt das Elektromotorsteuergerät 14 Steuersignale 20 zum Ansteuern eines Umrichters 22, der aus einer Gleichspannung eines Energiespeichers 24, zum Beispiel eine Batterie oder ein Akkumulator, eine Wechselspannung 26 wandelt und hierdurch elektrische Motoren 28 des elektrischen Antriebs 12 ansteuert.

Erfindungsgemäß umfasst das System 10 einen Funktionsblock 30. Der Funktionsblock 30 ist mit einem Bussystem 32 über einen Dateneingang 33 verbunden und eingerichtet, vom Bussystem 32 Gangwechselsignale 34 zu empfangen. In Abhängigkeit der Gangwechselsignale 34, die anzeigen, dass ein Zugfahrzeug einen Gangwechsel ausführt oder ein Gangwechsel kurz bevorsteht, erzeugt der Funktionsblock 30 mit einer ersten Steuerung 35 ein Drehmomenterhöhungsanforderungssignal 36. Dieses Drehmomenterhöhungsanforderungssignal 36 umfasst mindestens einen Drehmomentwert 39 und wird am Datenausgang 37 ausgegeben. Außerdem umfasst das System 10 ein Additionsglied 38, das einerseits Drehmomentwerte 39 des Drehmomenterhöhungsanforderungssignals 36 und andererseits Drehmomentsollwertvorgaben 18 des Anhängersteuergeräts 16 empfängt und diese addiert. Das Additionsergebnis wird dann dem Elektromotorsteuergerät 14 zugeführt. Das Elektromotorsteuergerät 14 erzeugt aus diesem Additionsergebnis 40 ein Steuersignal 20 zum Ansteuern der Umrichter 22 des elektrischen Antriebs 12. Das Steuersignal 20 ist ein pulswertemoduliertes Signal (PWM).

Zum Erzeugen der Drehmomentwerte 39 des Drehmomenterhöhungsanforderungssignals 36 werden dem Funktionsblock 30 Positionssignale 42 von Positionssensoren 44 des elektrischen Antriebs 12 zugeführt. Der Funktionsblock 30 weist dann ein Integrationsglied 45 auf, das aus den Positionssignalen 42 aktuelle Drehzahlwerte 46 des oder der elektrischen Motoren 28 des elektrischen Antriebs 12 bestimmt. Die Drehzahlwerte 46 werden einem Abtasthalteglied 48 zugeführt und durch Bilden der Differenz eines Ausgangs des Abtasthalteglieds 48 mit mindestens einem aktuellen Drehzahlwert 46 eine Änderung der Drehzahlwerte 50 einer oder mehrerer der elektrischen Maschinen 28 des elektrischen Antriebs 12 bestimmt. In einem Auswerteglied 52, das hier als weiteres Additionsglied 53 ausgebildet ist, werden dann Änderungen der Drehzahlwerte 50 sowie aktuelle Drehzahlwerte 46 zusammen mit einem oder mehreren Schlupfwerten 54 aufaddiert. Die Schlupfwerte 54 werden beispielsweise dem Funktionsblock 30 über ein Bussystem 32 bereitgestellt, wobei dann das Anhängersteuergerät 16 die Schlupfwerte 54 bestimmt und über das Bussystem 32 aussendet. Hierzu empfängt das Anhängersteuergerät 16 eine vorgegebene Referenzdrehzahl 55 und eine aktuelle Drehzahl 46 des mindestens einen elektrischen Motors 28 und bildet hieraus einen Differenzwert 57. Der Differenzwert 57 wird dann als Schlupfwert 54 ausgegeben.

Das Additionsergebnis, das auch als Summenwert 56 bezeichnet werden kann, wird einem Linearregler 58 zugeführt. Im Falle eines Gangwechselsignals 34, das einen bevorstehenden Gangwechsel oder das Ausführen eines Gangwechsels anzeigt, erzeugt der Linearregler 58 einen Drehmomentwert des Drehmomenterhöhungsanforderungssignals 36, um das Drehmoment der elektrischen Motoren 28 mit dem Elektromotorsteuergerät 14 über eine Drehmomentsollwertvorgabe 18 vom Anhängersteuergerät 16 hinaus zu erhöhen.

Der Funktionsblock 30 empfängt zusätzlich ein Aktivierungssignal 60, um den Funktionsblock 30 oder insbesondere den Linearregler 58 zu aktivieren oder deaktivieren, um im Falle bestimmter Fahrsituationen oder Fahrzustände das Erzeugen eines Drehmomenterhöhungsanforderungssignals 36 trotz eines bevorstehenden oder ausgeführten Gangwechsels zu unterdrücken. Dies kann beispielsweise bei Kurvenfahrten der Fall sein. Das Einschaltsignal 60 wird ebenfalls vorliegend vom Bussystem 32 empfangen und von dem Anhängersteuergerät 16 erzeugt.

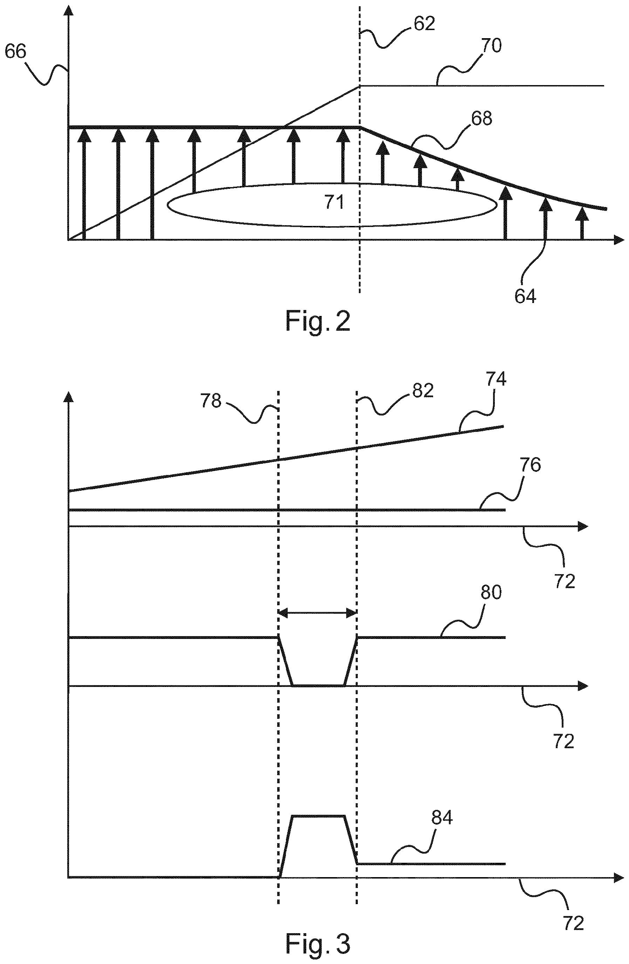

Fig. 2 zeigt, dass das Drehmoment eines elektrischen Antriebs 12 nur bis zur sogenannten Eckdrehzahl 62 einer Drehzahl eines elektrischen Antriebs konstant ist. Somit kann bei steigender Geschwindigkeit, die über die Achse 64 aufgetragen ist, ab der Eckdrehzahl 62 nicht mehr das volle gewünschte Drehmoment durch die elektrischen Maschinen 28 bereitgestellt werden. Im Detail zeigt Fig. 2 hierzu, wie bereits ausgeführt, die Geschwindigkeit des Fahrzeuganhängers, die auf der Achse 64 aufgetragen ist. Auf der senkrechten Achse 66 ist exemplarisch einerseits durch die Kurve 68 das durch den elektrischen Antrieb 12 bereitstellbare Drehmoment aufgetragen, wobei die hierfür aufgewendete Energie durch die Kurve 70 dargestellt ist. Mit zunehmender Geschwindigkeit steigt demnach die für das Bereitstellen eines konstanten Drehmoments benötigte Energie bis zur oben genannten Eckdrehzahl 62. Ab der Eckdrehzahl kann nicht mehr Energie bereitgestellt werden, was durch eine Ebene in der Kurve 70 dargestellt ist, während das Drehmoment, das durch den elektrischen Antrieb 12 bereitgestellt werden kann, ab der Eckdrehzahl 62 abfällt. Außerdem ist in Fig. 2 gezeigt, dass ein elektrischer Antrieb 12 in der Regel einen Bereich mit höchstem Wirkungsgrad aufweist. Dieser ist durch den Bereich 71 dargestellt.

Ein erster Schaltvorgang ist in Fig. 3 exemplarisch dargestellt, wobei hier beispielsweise ein Betrieb des elektrischen Antriebs 12 unterhalb der Eckdrehzahl 62 gezeigt ist. Hierzu ist auf der Achse 72 die Zeit aufgetragen. Die Drehzahl eines elektrischen Motors 28 ist über die Kurve 74 dargestellt, wobei diese ansteigt und somit ein Erhöhen der Drehzahlwerte bzw. der Geschwindigkeit des Fahrzeugs anzeigt. Gleichzeitig bleibt eine Änderung der Drehzahl, die durch die Kurve 76 dargestellt ist, konstant. Im Falle eines Gangwechsels, der ab dem Zeitpunkt 78 ausgeführt wird, fällt das Drehmoment, das durch einen Antrieb eines Zugfahrzeugs bereitgestellt wird und durch die Kurve 80 dargestellt ist, ab. Das Drehmoment steigt entsprechend wieder nach dem Gangwechsel, was durch den Zeitpunkt 82 dargestellt. In diesem Zeitraum, der zum Beispiel 400ms lang ist, zwischen dem Zeitpunkt des Beginns des Gangwechsels 78 bis zum Zeitpunkt 82 des Endes des Gangwechsels wird von der elektrischen Maschine ein zusätzliches Drehmoment bereitgestellt. Dies ist durch die Kurve 84 gezeigt. Anhand der Kurve 74 ist erkennbar, dass eine kontinuierliche Beschleunigung trotz eines Gangwechsels erfolgt.

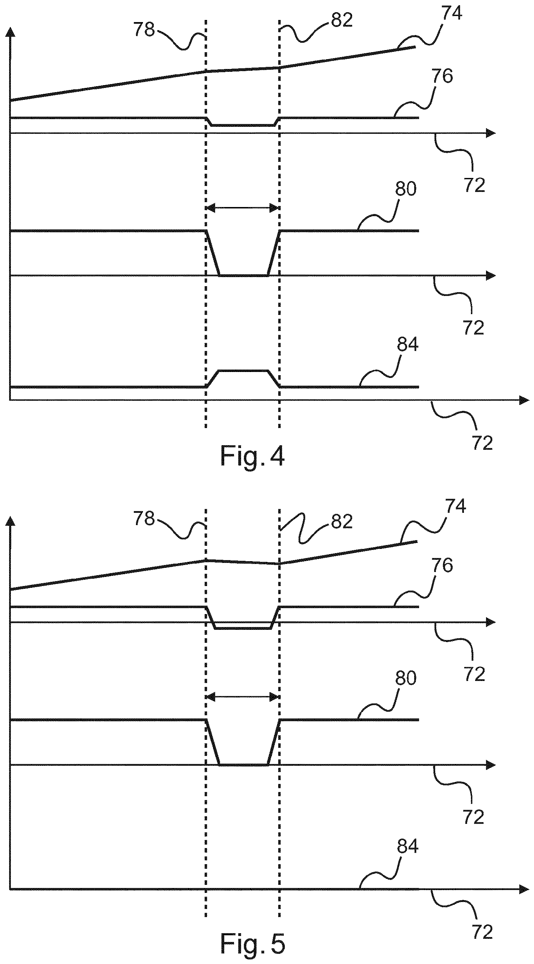

Fig. 4 zeigt den Vorgang aus Fig. 3, wobei hier die Situation dargestellt wird, dass sich der elektrische Antrieb 12 beispielsweise in einem Betriebsbereich oberhalb der Eckdrehzahl 62 befindet. Erkennbar ist, dass die Kurve 74 während des Gangwechsels in vergleichsweise geringerem Maße ansteigt, sodass kein kontinuierliches Ansteigen der Drehzahl mehr erfolgt.

Fig. 5 zeigt zuletzt den Fall, dass die Kurve 74 sogar einen geringen Abfall während des Gangwechsels aufweist, da von dem elektrischen Antrieb 12 beispielsweise bei sehr hohen Geschwindigkeiten kein unterstützendes Drehmoment mehr erzeugt werden kann.

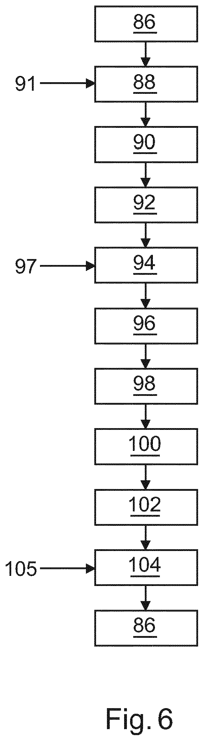

Zuletzt zeigt Fig. 6 die Schritte eines Ausführungsbeispiels des Verfahrens. Das System 10 befindet sich zunächst in einem deaktivierten Zustand 86. Im Schritt 88 erhält der Funktionsblock 30 ein Gangwechselsignal 34, das ein Gangwechselankündigungssignal 91 ist. Daraufhin wechselt das System 10 in einen aktivierten Zustand 90 und es wird in einem Schritt 92 ein vorgegebener geringer Drehmomentwert 39 eines Drehmomenterhöhungsanforderungssignals 36 in einem Schritt ausgegeben. In einem Schritt 94 wird dann ein Gangwechselausführsignal 97 empfangen und der Funktionsblock 30 ermittelt basierend auf diesem Gangwechselsignal 34 einen Drehmomentwert 39 eines Drehmomenterhöhungsanforderungssignals 36 in einem Schritt 96. Im Schritt 98 wird der Drehmomentwert 39 des Drehmomenterhöhungsanforderungssignals 36 von dem Funktionsblock 30 an einem Datenausgang 37 ausgegeben und einem Additionsglied 38 zugeführt. Im Schritt 100 wird im Additionsglied 38 der Drehmomentwert 39 des Drehmomenterhöhungsanforderungssignals 36 mit einer Drehmomentsollwertvoragabe 18 addiert und einer Elektromotorsteuerung 14 zugeführt, um in einem Schritt 102 das Drehmoment der elektrischen Motoren 28 eines elektrischen Antriebs 12 gegenüber der Drehmomentsollwertvorgabe 18 zu erhöhen. Im Schritt 104 empfängt der Funktionsblock 30 ein Gangwechselerledigungssignal 105, sodass das System 10 wieder einen deaktivierten Zustand 86 übergeht.

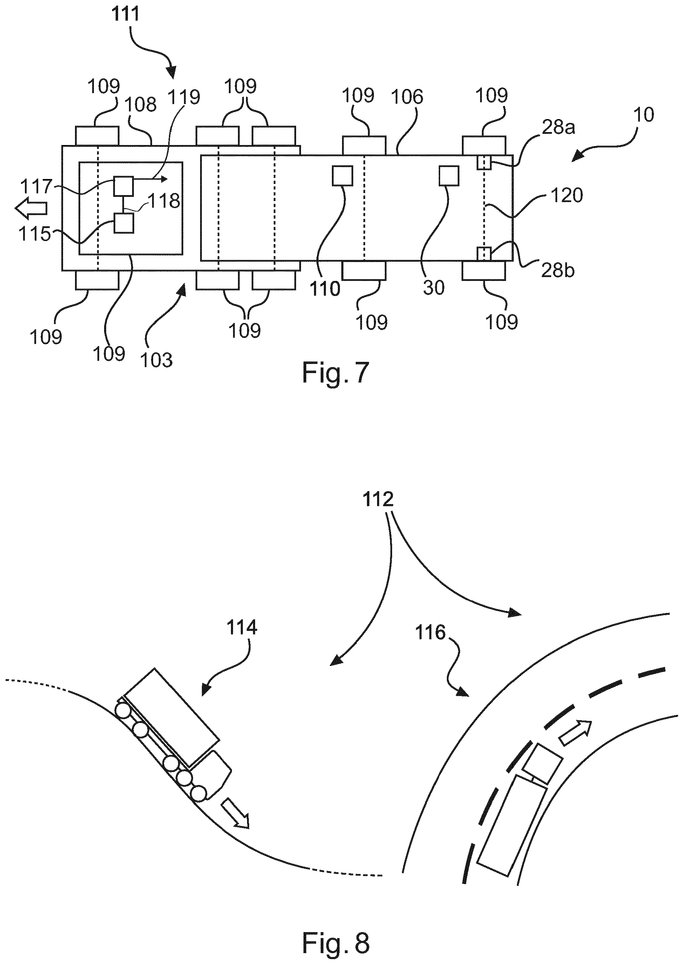

Fig. 7 zeigt ein System 10, das einen Fahrzeuganhänger 106 mit dem Funktionsblock 30 aufweist, der mit einem Zugfahrzeug 108 gezogen wird. Fahrzeuganhänger 106 und Zugfahrzeug 108 weisen mehrere Räder 109 auf. Die Abbildung ist eine Draufsicht, sodass sich in Fahrtrichtung 107 eine rechte Seite 105 und eine linke Seite 103 ergibt. Die Räder 109, die an der Hinterachse 120 angeordnet sind, weisen jeweils einen elektrischen Motor 28a, 28b auf. Der Fahrzeuganhänger 106 weist einen Sensor 110 auf. Außerdem weist das Zugfahrzeug 108 eine Fahrerkabine 113 auf. Die Fahrerkabine 113 umfasst Steuerelemente, wie etwa ein Gaspedal 115. Eine Gaspedalstellung 118 wird vom Gaspedal 115 an ein Fahrzeugsteuergerät 117 ausgegeben, das mit dem Anhängersteuergerät 16 Daten austauscht. Die Gaspedalstellung 118 wird im Fahrzeugsteuergerät 117 als Beschleunigungswunsch 119 des Fahrers interpretiert und ein Antrieb entsprechend angesteuert.

Fig. 8 zeigt schematisch zwei Fahrzustände 112 eines Zugfahrzeugs 108, das einen Fahrzeuganhänger 106 zieht. Links ist eine Bergabfahrt 114 und rechts eine Kurvenfahrt 116 dargestellt.

### Bezugszeichenliste (Bestandteil der Beschreibung)

- 10: System
- 12: elektrischer Antrieb
- 14: Elektromotorsteuergerät
- 16: Anhängersteuergerät
- 18: Drehmomentsollwertvorgaben
- 20: Steuersignale
- 22: Umrichter
- 24: Energiespeicher
- 26: Wechselspannung
- 28, 28a, 28b: elektrische Motoren
- 30: Funktionsblock
- 32: Bussystem
- 33: Dateneingang
- 34: Gangwechselsignale
- 35: Steuerung
- 36: Drehmomenterhöhungsanforderungssignal
- 37: Datenausgang
- 38: Additionsglied
- 39: Drehmomentwert
- 40: Additionsergebnis
- 42: Positionssignale
- 44: Positionssensoren
- 45: Integrationsglied
- 46: aktuelle Drehzahlwerte
- 48: Abtasthalteglied
- 50: Änderung der Drehzahlwerte
- 52: Auswerteglied
- 53: Additionsglied
- 54: Schlupfwert
- 55: vorgegebene Referenzdrehzahl
- 56: Summenwert
- 57: Differenzwert
- 58: Linearregler
- 60: Aktivierungssignal
- 62: Eckdrehzahl
- 64: Geschwindigkeitsachse
- 66: Drehmomentsachse
- 68: Drehmomentskurve
- 70: Energiekurve
- 71: Bereich
- 72: Zeitachse
- 74: Drehzahlkurve
- 76: Drehzahländerungskurve
- 78: Zeitpunkt Beginn Gangwechsel
- 80: Drehmomentskurve
- 82: Zeitpunkt Ende Gangwechsel
- 84: Drehmomentskurve
- 86: deaktivierter Zustand
- 88: Schritt des Verfahrens
- 90: aktivierter Zustand
- 91: Gangwechselankündigungssignal
- 92-96: Schritte des Verfahrens
- 97: Gangwechselausführsignal
- 98-102: Schritte des Verfahrens
- 103: linke Seite
- 104: Schritt des Verfahrens
- 105: Gangwechselerledigungssignal
- 106: Fahrzeuganhänger
- 107: Fahrtrichtung
- 108: Zugfahrzeug
- 109: Räder
- 110: Sensor
- 111: rechte Seite
- 112: Fahrzustände
- 113: Fahrerkabine
- 114: Bergabfahrt
- 115: Gaspedal
- 116: Kurvenfahrt
- 117: Fahrzeugsteuergerät
- 118: Gaspedalstellung
- 119: Beschleunigungswunsch
- 120: Hinterachse

## Patentansprüche

1. System (10) für einen Fahrzeuganhänger (106), insbesondere einen Sattelauflieger (106), umfassend einen Funktionsblock (30) mit einem Dateneingang (33) zum Empfangen von Gangwechselsignalen (34) eines den Fahrzeuganhänger (106) ziehenden Fahrzeugs (108), insbesondere eines Nutzfahrzeugs (108), wobei der Funktionsblock (30) eine Steuerung (35) zum Erzeugen eines Drehmomenterhöhungsanforderungssignals (36) in Abhängigkeit eines empfangenen Gangwechselsignals (34) der Gangwechselsignale (34) sowie einen Datenausgang (37) zum Ausgeben des Drehmomenterhöhungsanforderungssignals (36) an ein Elektromotorsteuergerät (14) mindestens eines elektrischen Antriebs (12) des Fahrzeuganhängers (106) umfasst.

2. System (10) nach Anspruch 1, wobei das Drehmomenterhöhungsanforderungssignal (36) mindestens einen Drehmomentwert (39) umfasst und der Funktionsblock (30) eingerichtet ist, am Datenausgang (37) bereitgestellte Drehmomentwerte (39) des Drehmomenterhöhungsanforderungssignals (36) Drehmomentsollwertvorgaben (18) für mindestens einen elektrischen Motor (28), insbesondere mit einem Addierglied (38) durch Aufaddieren, zu überlagern, wobei die Drehmomentsollwertvorgaben (18) vorzugsweise von einem Anhängersteuergerät (16) des Systems (10) bereitgestellt werden.

3. System (10) nach Anspruch 1 oder 2, wobei der Funktionsblock (30) eingerichtet ist, den Drehmomentwert (39) des Drehmomenterhöhungsanforderungssignals (36) in Abhängigkeit mindestens eines aktuellen Drehzahlwerts (46) sowie einer Änderung der Drehzahlwerte (50) des mindestens einen elektrischen Motors (28) zu bestimmen, wobei der Funktionsblock (30) zum Bestimmen der Änderung der Drehzahlwerte (50) vorzugsweise ein Abtasthalteglied (48) aufweist, dem aufeinanderfolgende aktuelle Drehzahlwerte (46) zuführbar sind, und vorzugsweise ein Integrationsglied (45) zum Bestimmen aktueller Drehzahlwerte (46) aus von Positionssensoren (44) empfangbaren Positionssignalen (42) der elektrischen Motoren (28) aufweist.

4. System (10) nach einem der vorhergehenden Ansprüche, wobei der Funktionsblock (30) eingerichtet ist, einen Drehmomentwert (39) des Drehmomenterhöhungsanforderungssignals (36) zusätzlich in Abhängigkeit mindestens eines Schlupfwertes (54) zu bestimmen, wobei ein Schlupfwert (54) vorzugsweise durch Bilden eines Differenzwerts (57) zwischen einer vorgebbaren Referenzdrehzahl (55) und einer aktuellen Drehzahl (46) des mindestens einen elektrischen Motors (28) bestimmbar ist.

5. System (10) nach Anspruch 3 und 4, wobei der Funktionsblock (30) ein Auswerteglied (52), das insbesondere ein Additionsglied (53) ist, aufweist, um Änderungen der aktuellen Drehzahlwerte (50), aktuelle Drehzahlwerte (46) und Schlupfwerte (54), insbesondere durch Aufaddieren und Bilden eines Summenwerts (56), zur Bildung des Drehmomenterhöhungsanforderungssignals (36) auszuwerten.

6. System (10) nach Anspruch 5, wobei der Funktionsblock (50) einen Linearregler (58) mit einem proportional verstärkendem Verhalten aufweist, dem die Summenwerte (56) des Additionsglieds (53) bereitstellbar sind, um Drehmomentwerte (39) des Drehmomenterhöhungsanforderungssignals (36) zu erzeugen.

7. System (10) nach einem der vorhergehenden Ansprüche, wobei der Funktionsblock (30) eingerichtet ist, nach dem Empfangen eines Gangwechselsignals (34), das ein Gangwechselausführsignal (97) ist, einen von 0 unterschiedlichen Drehmomentwert (39) des Drehmomenterhöhungsanforderungssignals (36) bis zum Empfangen eines Gangwechselsignals (34), das ein Gangwechselerledigungssignal (105) ist, auszugeben, wobei der Drehmomentwert (39) des Drehmomenterhöhungsanforderungssignals (36), vorzugsweise im Wesentlichen, konstant ist.

8. System (10) nach einem der vorhergehenden Ansprüche, wobei der Funktionsblock (30) eingerichtet ist, vor dem Empfang eines Gangwechselsignals (34), das ein Gangwechselausführsignal (97) ist, zunächst ein Gangwechselsignal (34) zu empfangen, das ein Gangwechselankündigungssignal (91) ist, und weiter eingerichtet ist, am Datenausgang (37) einen Drehmomentwert (39) auszugeben, der nach dem Empfangen des Gangwechselankündigungssignals (91) zumindest bis zum Empfangen des Gangwechselausführsignals (97) in einem oder mehreren Schritten (88) oder kontinuierlich erhöht wird.

9. System (10) nach einem der vorhergehenden Ansprüche, wobei der Funktionsblock (30) einen aktivierten Zustand (90) und einen deaktivierten Zustand (86) aufweist und eingerichtet ist, im deaktivierten Zustand (86) einen Drehmomentwert (39) von 0 am Ausgang (37) auszugeben, vom deaktivierten Zustang (86) in den aktivierten Zustand (90) nach dem Empfangen eines Gangwechselsignals (34), das ein Gangwechselankündigungssignal (91) oder ein Gangwechselausführsignal (97) ist, zu wechseln und vom aktivierten Zustand (90) in den deaktivierten Zustand (86) zu wechseln, nachdem ein Gangwechselsignal (34) empfangen wurde, das ein Gangwechselerledigungssignal (105) ist.

10. System (10) nach einem der vorhergehenden Ansprüche, wobei das System (10) mindestens einen Sensor (110) umfasst oder eingerichtet ist, mit mindestens einem Sensor (110) verbunden zu werden, wobei der Sensor (110) eingerichtet ist, Fahrzustände (112) des Fahrzeuganhängers (106), insbesondere Kurvenfahrten (116) und/oder Bergabfahrten (114), zu detektieren.

11. System (10) nach Anspruch 10, wobei der Sensor (110) ein Giratensensor (110) und/oder ein Neigungssensor (110) und/oder ein Beschleunigungssensor (110) und/oder mehrere Drehzahlsensoren (110) und/oder Drehpositionssensoren (44) umfasst, wobei die Drehzahlsensoren (110) und/oder Drehpositionssensoren (44) eingerichtet sind, um Drehzahlen von Rädern (109) des Fahrzeuganhängers (106) auf unterschiedlichen Seiten (103, 111) des Fahrzeuganhängers (106) zu erfassen.

12. System (10) nach einem der vorhergehenden Ansprüche, wobei der Funktionsblock (30) eingerichtet ist, nach dem Empfangen eines Gangwechselsignals (34), das ein Gangwechselankündigungssignal (91) oder ein Gangwechselausführsignal (97) ist, durch Detektion einer vordefinierten Bedingung, insbesondere einer Detektion einer Kurvenfahrt (116) des Fahrzeuganhängers (106), daran gehindert zu werden, vom deaktivierten Zustand (86) in den aktivierten Zustand (90) zu wechseln oder daran gehindert zu werden, in den deaktivierten Zustand (86) zu wechseln.

13. System (10) nach einem der vorhergehenden Ansprüche, wobei der Funktionsblock (30) eingerichtet ist, unterschiedliche Drehmomentsollwerte (39) für unterschiedliche elektrische Motoren (28, 28a, 28b) am Datenausgang (37) auszugeben.

14. System (10) nach einem der vorhergehenden Ansprüche, wobei der Funktionsblock (30) eingerichtet ist, Gangwechselsignale (34) und/oder Schlupfwerte (54) von einem Bussystem (32), insbesondere einem CAN-Bus (32), zu empfangen oder in Abhängigkeit eines über eine Gaspedalstellung (118) detektierbaren Beschleunigungswunsches (119) in Verbindung mit einem detektierbaren Geschwindigkeitsverlust eines Zugfahrzeugs (108) zu detektieren.

15. Fahrzeuganhänger (106) mit einem System (10) nach einem der vorhergehenden Ansprüche, wobei der Fahrzeuganhänger (106) einen elektrischen Antrieb (12) umfasst, wobei der elektrische Antrieb (12) einen Energiespeicher (24), einen Umrichter (22) zum Erzeugen eines Wechselstroms (26) aus der Energie im Energiespeicher (24), einen oder mehrere elektrische Motoren (28) sowie ein Elektromotorsteuergerät (14) zum Ansteuern der Umrichter (22) aufweist.

16. Fahrzeuganhänger (106) nach Anspruch 15, **dadurch gekennzeichnet, dass** der Fahrzeuganhänger (106) von einem Zugfahrzeug (108) gezogen wird oder an das Zugfahrzeug (108) angekuppelt ist, welches insbesondere ein Nutzfahrzeug (108) ist, wobei vorzugsweise auch das Zugfahrzeug (108) einen weiteren Funktionsblock (30) und einen elektrischen Antrieb (12) aufweist.

17. Verfahren zum Betreiben eines Systems (10) nach einem der Ansprüche 1 bis 14 mit den folgenden Schritten:
- Empfangen (88, 94) eines Gangwechselsignals (34),
- Erzeugen (96) eines Drehmomenterhöhungsanforderungssignals (36) in Abhängigkeit des Gangwechselsignals (34) und
- Ausgeben (98) des Drehmomenterhöhungsanforderungssignals (36) an ein Elektromotorsteuergerät (14).

## Claims

1. A system (10) for a vehicle trailer (106), in particular a semi-trailer (106), comprising a function block (30) having a data input (33) configured to receive gear shift signals (34) of a vehicle (108), in particular a utility vehicle (108), towing the vehicle trailer (106), wherein the function block (30) comprises a controller (35) configured to generate a torque increase request signal (36) depending on a received gear shift signal (34) of the gear shift signals (34), and a data output (37) configured to output the torque increase request signal (36) to an electric motor controller (14) of at least one electric drive (12) of the vehicle trailer (106).

2. The system (10) according to claim 1, wherein the torque increase request signal (36) includes at least one torque value (39) and the function block (30) is set up to overlay torque values (39) of the torque increase request signal (36) provided at the data output (37) on torque setpoint value specifications (18) for at least one electric motor (28), in particular by summation with an addition element (38), wherein the torque setpoint value specifications (18) are preferably provided by a trailer controller (16) of the system (10).

3. The system (10) according to claim 1 or 2, wherein the function block (30) is set up to determine the torque value (39) of the torque increase request signal (36) depending on at least one current revolution rate value (46) and a change in the revolution rate values (50) of the at least one electric motor (28), wherein for determining the change of the revolution rate values (50) the function block (30) preferably has a sample-and-hold element (48), to which successive current revolution rate values (46) are configured to be fed, and preferably an integration element (45) for determining current revolution rate values (46) from position signals (42) received from position sensors (44) of the electric motors (28).

4. The system (10) according to any of the foregoing claims, wherein the function block (30) is set up to determine a torque value (39) of the torque increase request signal (36) additionally depending on at least one slip value (54), wherein a slip value (54) is preferably determined by forming a difference value (57) between a predeterminable reference revolution rate (55) and a current revolution rate (46) of the at least one electric motor (28).

5. The system (10) according to claim 3 and 4, wherein the function block (30) has an evaluation element (52), which is in particular an addition element (53), for evaluating changes in the current revolution rate values (50), current revolution rate values (46) and slip values (54), in particular by adding up and forming a total value (56), to form the torque increase request signal (36).

6. The system (10) according to claim 5, wherein the function block (50) has a linear controller (58) with a proportionally reinforcing behavior, to which the total values (56) of the addition element (53) can be provided, for producing torque values (39) of the torque increase request signal (36).

7. The system (10) according to any of the foregoing claims, wherein the function block (30) is set up, after receiving a gear shift signal (34) which is a gear shift execution signal (97), to output a torque value (39) of the torque increase request signal (36) which is different from 0 until the reception of a gear shift signal (34) which is a gear shift completion signal (105), wherein the torque value (39) of the torque increase request signal (36) is preferably substantially constant.

8. The system (10) according to any of the foregoing claims, wherein the function block (30) is set up, before receiving a gear shift signal (34) which is a gear shift execution signal (97), first to receive a gear shift signal (34) which is a gear shift announcement signal (91) and is further set up to output a torque value (39) at the data output (37) which is increased in one or more steps (88) or continuously after the reception of a gear shift announcement signal (91) at least until the reception of the gear shift execution signal (97) .

9. The system (10) according to any of the foregoing claims, wherein the function block (30) has an activated state (90) and a deactivated state (86) and is set up to output a torque value (39) of 0 at the output (37) in the deactivated state (86), to change from the deactivated state (86) to the activated state (90) after receiving a gear shift signal (34) which is a gear shift announcement signal (91) or a gear shift execution signal (97), and to switch from the activated state (90) to the deactivated state (86) after receiving a gear shift signal (34) which is a gear shift completion signal (105).

10. The system (10) according to any of the foregoing claims, wherein the system (10) comprises at least one sensor (110) or is set up to be connected to at least one sensor (110), wherein the sensor (110) is set up to detect driving conditions (112) of the trailer (106), in particular cornering (116) and/or downhill travel (114).

11. The system (10) according to claim 10, wherein the sensor (110) comprises a yaw rate sensor (110) and/or an inclination sensor (110) and/or an acceleration sensor (110) and/or multiple revolution rate sensors (110) and/or rotary position sensors (44), wherein the revolution rate sensors (110) and/or rotary position sensors (44) are set up to detect revolution rates of wheels (109) of the trailer (106) on different sides (103, 111) of the vehicle trailer (106).

12. The system (10) according to any of the foregoing claims, wherein the function block (30) is set up to be prevented from changing from the deactivated state (86) to the activated state (90) or from changing to the deactivated state (86) by the detection of a predefined condition, in particular detection of cornering (116) of the vehicle trailer (106), after receiving a gear shift signal (34) which is a gear shift announcement signal (91) or a gear shift execution signal (97).

13. The system (10) according to any of the foregoing claims, wherein the function block (30) is set up to output different torque setpoint values (39) at the data output (37) for different electric motors (28, 28a, 28b).

14. The system (10) according to any of the foregoing claims, wherein the function block (30) is set up to receive gear shift signals (34) and/or slip values (54) from a bus system (32), in particular a CAN bus (32), or to detect these depending on a wish to accelerate (119) that can be detected from a gas pedal position (118) in conjunction with a detectable loss of speed of a towing vehicle (108).

15. A vehicle trailer (106) having a system (10) according to any of the foregoing claims, wherein the vehicle trailer (106) comprises an electric drive (12), wherein the electric drive (12) comprises an energy store (24), an inverter (22) for generating an alternating current (26) from the energy in the energy store (24), one or more electric motors (28), and an electric motor controller (14) configured to control the inverter (22).

16. The vehicle trailer (106) according to claim 15, **characterized in that** the vehicle trailer (106) is configured to be towed by a towing vehicle (108), in particular a utility vehicle (108), or is coupled to the towing vehicle (108), wherein the towing vehicle (108) preferably also has a further function block (30) and an electric drive (12).

17. A method for operating a system (10) according to any of claims 1 to 14, having the following steps:
- receiving (88, 94) a gear shift signal (34),
- generating (96) a torque increase request signal (36) depending on the gear shift signal (34) and
- outputting (98) the torque increase request signal (36) to an electric motor controller (14).

## Revendications

1. Système (10) pour une remorque de véhicule (106), en particulier un semi-remorque (106), qui comprend un bloc fonctionnel (30) avec une entrée de données (33) pour recevoir des signaux de changement de vitesse (34) d'un véhicule (108) qui tire la remorque de véhicule (106), en particulier d'un véhicule utilitaire (108), dans lequel le bloc fonctionnel (30) comprend une commande (35) pour produire un signal de demande d'augmentation de couple (36) en fonction d'un signal de changement de vitesse (34) reçu des signaux de changement de vitesse (34) ainsi qu'une sortie de données (37) pour transmettre le signal de demande d'augmentation de couple (36) à un calculateur de moteur électrique (14) d'au moins un entraînement électrique (12) de la remorque de véhicule (106).

2. Système (10) selon la revendication 1, dans lequel le signal de demande d'augmentation de couple (36) comprend au moins une valeur de couple (39) et le bloc fonctionnel (30) est mis en place pour superposer, en particulier par addition à l'aide d'un additionneur (38), des valeurs de couple (39) du signal de demande d'augmentation de couple (36) fournies au niveau de la sortie de données (37) à des objectifs de valeur de consigne de couple (18) pour au moins un moteur électrique (28), dans lequel les objectifs de valeur de consigne de couple (18) sont de préférence fournis par un calculateur de remorque (16) du système (10).

3. Système (10) selon la revendication 1 ou 2, dans lequel le bloc fonctionnel (30) est mis en place pour déterminer la valeur de couple (39) du signal de demande d'augmentation de couple (36) en fonction d'au moins une valeur de vitesse (46) en cours ainsi que d'une modification des valeurs de vitesse (50) du au moins un moteur électrique (28), dans lequel le bloc fonctionnel (30), pour déterminer la modification des valeurs de vitesse (50), présente de préférence un organe de maintien de détection (48) auquel des valeurs de vitesse (46) en cours qui se succèdent peuvent être amenées, et de préférence un organe d'intégration (45) pour déterminer des valeurs de vitesse (46) en cours à partir de signaux de position (42) des moteurs électriques (28) qui peuvent être reçus par des capteurs de position (44).

4. Système (10) selon l'une des revendications précédentes, dans lequel le bloc fonctionnel (30) est mis en place pour déterminer une valeur de couple (39) du signal de demande d'augmentation de couple (36) en fonction en outre d'au moins une valeur de glissement (54), dans lequel une valeur de glissement (54) peut être déterminée de préférence par formation d'une valeur différentielle (57) entre une vitesse de référence (55) qui peut être prédéfinie et une vitesse (46) en cours du au moins un moteur électrique (28).

5. Système (10) selon la revendication 3 et 4, dans lequel le bloc fonctionnel (30) présente un organe d'exploitation (52), qui est en particulier un organe d'addition (53), pour exploiter des modifications des valeurs de vitesse (50) en cours, des valeurs de vitesse (46) et des valeurs de glissement (54) en cours, en particulier par addition et formation d'une valeur de somme (56), afin de former le signal de demande d'augmentation de couple (36).

6. Système (10) selon la revendication 5, dans lequel le bloc fonctionnel (30) présente un régulateur linéaire (58) avec un comportement à renforcement proportionnel, auquel sont fournies les valeurs de somme (56) de l'organe d'addition (53) pour produire des valeurs de couple (39) du signal de demande d'augmentation de couple (36).

7. Système (10) selon l'une des revendications précédentes, dans lequel le bloc fonctionnel (30) est mis en place pour, après réception d'un signal de changement de vitesse (34), qui est un signal d'exécution de changement de vitesse (97), transmettre une valeur de couple (39) du signal de demande d'augmentation de couple (36) différente de 0 jusqu'à réception d'un signal de changement de vitesse (34), qui est un signal d'accomplissement de changement de vitesse (105), dans lequel la valeur de couple (39) du signal de demande d'augmentation de couple (36) est, de préférence essentiellement, constante.

8. Système (10) selon l'une des revendications précédentes, dans lequel le bloc fonctionnel (30) est mis en place pour, avant réception d'un signal de changement de vitesse (34), qui est un signal d'exécution de changement de vitesse (97), d'abord recevoir un signal de changement de vitesse (34), qui est un signal d'annonce de changement de vitesse (91), et en outre mis en place pour, au niveau de la sortie de données (37), transmettre une valeur de couple (39) qui après réception du signal d'annonce de changement de vitesse (91) est augmenté en une ou plusieurs étapes (88) ou en continu au moins jusqu'à réception du signal d'exécution de changement de vitesse (97).

9. Système (10) selon l'une des revendications précédentes, dans lequel le bloc fonctionnel (30) présente un état activé (90) et un état désactivé (86) et est mis en place pour à l'état désactivé (86) transmettre une valeur de couple (39) de 0 au niveau de la sortie (37), passer de l'état désactivé (86) à l'état activé (90) après réception d'un signal de changement de vitesse (34), qui est un signal d'annonce de changement de vitesse (91) ou un signal d'exécution de changement de vitesse (97), passer de l'état activé (90) à l'état désactivé (86) après qu'a été reçu un signal de changement de vitesse (34), qui est un signal d'accomplissement de changement de vitesse (105).

10. Système (10) selon l'une des revendications précédentes, dans lequel le système (10) comprend au moins un capteur (110) ou est mis en place pour être relié à au moins un capteur (110), dans lequel le capteur (110) est mis en place pour détecter des conditions de roulage (112) de la remorque de véhicule (106), en particulier des conduites en virage (116) et/ou des départs en côte (114).

11. Système (10) selon la revendication 10, dans lequel le capteur (110) comprend un capteur de taux de lacet (110) et/ou un capteur d'inclinaison (110) et /ou un capteur d'accélération (110) et/ou plusieurs capteurs de vitesse (110) et/ou capteurs de position de rotation (44), dans lequel les capteurs de vitesse (110) et/ou capteurs de position de rotation (44) sont mis en place pour saisir des vitesses de roues (109) de la remorque de véhicule (106) sur des côtés (103, 111) différents de la remorque de véhicule (106).

12. Système (10) selon l'une des revendications précédentes, dans lequel le bloc fonctionnel (30) est mis en place pour, après réception d'un signal de changement de vitesse (34), qui est un signal d'annonce de changement de vitesse (91) ou un signal d'exécution de changement de vitesse (97), être forcé, par détection d'une condition prédéfinie, en particulier d'une détection d'une conduite en virage (116) de la remorque de véhicule (106), à passer de l'état désactivé (86) à l'état activé (90) ou être forcé à passer à l'état désactivé (86).

13. Système (10) selon l'une des revendications précédentes, dans lequel le bloc fonctionnel (30) est mis en place pour transmettre des valeurs de consigne de couple (39) différentes pour des moteurs électriques (28, 28a, 28b) au niveau de la sortie de données (37).

14. Système (10) selon l'une des revendications précédentes, dans lequel le bloc fonctionnel (30) est mis en place pour recevoir des signaux de changement de vitesse (34) et/ou des valeurs de glissement (54) depuis un système de bus (32), en particulier un bus CAN (32), ou à en détecter en fonction d'une demande d'accélération (119) qui peut être détectée via une position de pédale d'accélérateur (118) en lien avec une perte de vitesse d'un véhicule de traction (108) qui peut être détectée.

15. Remorque de véhicule (106) avec un système (10) selon l'une des revendications précédentes, dans lequel la remorque de véhicule (106) comprend un entraînement électrique (12), dans laquelle l'entraînement électrique (12) présente un accumulateur d'énergie (24), un convertisseur (22) pour produire un courant alternatif (26) à partir de l'énergie dans l'accumulateur d'énergie (24), un ou plusieurs moteurs électriques (28) ainsi qu'un calculateur de moteur électrique (14) pour piloter les convertisseurs (22).

16. Remorque de véhicule (106) selon la revendication 15, **caractérisée en ce que** la remorque de véhicule (106) est tirée par un véhicule de traction (108) ou couplé au véhicule de traction (108), lequel en particulier est un véhicule utilitaire (108), dans laquelle de préférence le véhicule de traction (108) présente lui aussi un autre bloc fonctionnel (30) et un entraînement électrique (12).

17. Procédé pour faire fonctionner un système (10) selon l'une des revendications 1 à 14 avec les étapes suivantes :
- réception (88, 94) d'un signal de changement de vitesse (34),
- production (96) d'un signal de demande d'augmentation de couple (36) en fonction du signal de changement de vitesse (34) et
- transmission (98) du signal de demande d'augmentation de couple (36) à un calculateur de moteur électrique (14).
